# EUROPEAN PATENT APPLICATION

(11) **EP 1 589 066 A1**
(43) Date of publication of application: **26.10.2005**
(21) Application number: 05290871.2
(22) Date of filing: 19.04.2005
(51) Int. Cl.: C08K 7/28, C09D 7/12

(54) **Seamless smooth acoustical ceiling**

(30) Priority: 20.04.2004 US 563508
(71) Applicant: Ariel, Zeev, Ramat-Aviv 69497 (IL)
(72) Inventor: Ariel, Zeev, Ramat-Aviv 69497 (IL)
(74) Representative: Bérogin, Francis

(57) **Abstract**

Described is a seamless smooth surface, such as ceiling or wall, composed of dimensionally-stable acoustical panels painted with an acoustically transparent paint that includes microspheres of blown glass. These microspheres' preferable diameter is between about 100 and about 200 micrometers. These spheres are preferably hollow, with side walls having thickness of about 1/10 the sphere diameter. Preferably, the interior of such hollow spheres is degassed.

## Description

### FIELD OF THE INVENTION

This invention relates to seamless smooth acoustical walls, ceilings, and the like.

### BACKGROUND OF THE INVENTION

Seamless ceilings, having a smooth texture, are very popular in modem internal design.

Sto AG is a German company that offers acoustical panels made of recycled blown glass. These panels are further described in the technical datasheet of the company, relating to StoSilent Panel 2000.

To obtain from such panels a seamless ceiling, it is to be installed, and painted with special acoustically transparent plaster named StoSilent Top, in a many-steps expensive and labor-demanding process, described in the company technical data sheet relating to StoSilent Top, by Sto AG.

US 5,888,626 and US 6,248,351 describe products with plain, fine textured, non-perforated surface consisting of a fiberboard substrate painted with acoustically transparent paint that has, prior to application to the substrate, solid content of 70-85%.

Hy-Tech Thermal Solutions is a NASA technology spin off company, which sales a sound absorbing paint, named Acousti-Coat, described to be a heavy bodied, water based smooth latex paint formulated with ceramic microspheres and sound absorbing fillers, such as perilite. Surfaces painted with Acousti-Coat exhibit fine texture.

### SUMMARY OF THE INVENTION

The present invention provides a seamless smooth surface, such as ceiling or wall, composed of dimensionally-stable acoustical panels painted with an acoustically transparent paint that includes microspheres of blown glass. These microspheres' preferable diameter is between about 50 and about 500 micrometers, most preferable diameter is between about 100 and about 200 micrometers. These spheres are preferably hollow, with side walls having thickness of about 1/10 the sphere diameter. Preferably, the interior of such hollow spheres is degassed.

A surface is said to be *seamless* (or jointless) if none of the seams or joints underlining it appear to the eye.

Preferably, the surface appears as if painted with common paint.

A panel is said to be *dimensionally stable* if it does not change its size due to normal room temperature variations, and when such a size change does occur, it is not large enough to cause cracks in the paint along the surface, even if it is seamless for a length of up to 25m and/or an area of up to 200m². Surfaces having a thermal expansion coefficient of about 6 to 10 X 10⁻⁶ m/mK are expected to exhibit the required dimensional stability.

An acoustical panel is a panel that absorbs sound (i.e. regulates echo), as measured by a Noise Reduction Coefficient (NRC) of 0.45 and above, preferably 0.55 and above.

A paint is said to be acoustically transparent if painting with it an acoustical panel does not decrease the sound absorbance of the panel, and if it does, this decrease is smaller than 15% of the sound absorbance of the non-painted panel, preferably less than 5%. In practice, the acoustical transparency of the paint may be determined not only by intrinsic parameters of the paint itself, but also by the combination of paint and panel.

A panel according to the invention preferably comprises blown glass granulates and a bonding agent, which may be organic or inorganic. In a preferred embodiment, the panel is fiber-free, and thus physiologically safe for both installers and users.

Preferably, there is a textile fleece situated between the panel and the paint. The fleece may serve as the substrate for the acoustical paint Preferably, the fleece is made of a non-woven textile.

Prior to application to the panel, the paint layer is water-based paint with solid content of between about 50% and about 65%(w/w), preferably about 60%.

Preferably the microspheres of blown glass make between about 15% and about 60% of the total solids in the painting emulsion, most preferably about 40%.

Preferably, the thickness of the paint layer is of about 250 - 500 micron.

The ceiling of the invention may be installed with or without air space from the ceiling substrate.

Preferably a sound absorbing material, such as fiberglass, wool glass, open-cell foamed material, is placed behind the acoustical panel in order to improve the acoustical absorption thereof.

The invention also provides an inert acoustical panel painted with an acoustically transparent paint that includes microspheres of blown glass.

Also provided is a method for painting an acoustical panel while retaining the acoustical properties thereof, comprising coating said acoustical panel with a paint that includes microspheres of blown glass.

According to another aspect of the present invention, there is provided a method for painting an acoustical panel while retaining the acoustical properties thereof, comprising coating said acoustical panel with an acoustically transparent paint that includes hollow microspheres of blown glass.

According to yet another aspect of the present invention there is provided an acoustically transparent paint that upon being sprayed on acoustical panel provides a smooth painted surface, the paint including hollow microspheres of blown glass. A paint according to the invention provides particular optical transparency and smooth surface when the panel has a fleece of the kind included in StoSilent Panel 2000, as this is currently commercially available.

The acoustically transparent paint of the invention preferably includes only particles having size not larger than 200micrometers.

### DETAILED DESCRIPTION OF A PREFERRED EMBODIMENT

In order to understand the invention and to see how it may be carried out in practice, a preferred embodiment will now be described, by way of non-limiting example only.

A suspended ceiling was constructed from StoSilent Panel 2000, produced and marketed by Sto AG, Germany, in accordance with the instructions given in Sto technical data sheet. Followed were instructions 1 and 4. These instructions read:

### "1. Suspended sub-frame ceilings

1.1 Attach the sub-construction firm to the ceiling element using rigid Nonius - hangers. The hangers should be fixed using normal, approved fixings (e.g. steel dowels). The hangers should be placed at 1000 mm intervals.
1.2 Fix UD Profiles at the desired ceiling height around the edge of the room. The screws should be fixed at 500 mm intervals.
1.3 Insert the CD Hanger Beams (Grundprofile) in to the UD Edge Profiles (Randprofile), connect to the hangers and adjust to the desired length so that the entire structure is **exactly** level. The CD Hanger Beams (Grundprofile) should be attached at 1250 mm intervals.
1.4 The CD Support Beams (Tragprofile) should be fixed perpendicular to the Hanger Beams (Grundprofile) using Cross-Connectors (Kreuzverbinder) or Fixing-Angles (Ankerwinkel). The CD Support Beams (Tragprofile) should be fixed at 400 mm intervals.

### 4. Fixing of StoSilent Panels 200 for a jointless wall or ceiling surface

4.1 The total jointless surface area should not exceed 200 m². The max. unbroken width / length is 25m. In case of larger surface areas, please consult acoustic product management, expansion joints will probably be necessary.
4.2 The boards should be fixed to run length ways down the support beams.
4.3 Fix the boards in runs with staggered joints like brickwork. There should be at least 400 mm difference between board ends.
4.4 The boards should be fixed using self-tapping phosphated screws, starting either in the middle of the board or in the corner, so that the board is not placed under any undue stresses. When fixing the screws, the board must be pressed firmly against the substrate.
4.5 The screw heads should be sunk about 1 mm in to the board and 15 mm from the board edge. Screws should be sunk at 300 mm intervals.
4.6 All board edges should be adhered using Sto Joint Sealant (Sto-Fugenkitt) (Art No. 0552-001). Remove all excess material squeezed out when the boards are pressed together. Make sure that the Sto Joint Sealant is not spread around the surface of the board. The joints between the boards and screw heads should be filled with Sto-Plastofix (Art No. 0725-001) with the excess being immediately removed. After 1-2 hrs. the board should be checked and any new excess material once again be removed.
4.7 Once the Sto-Plastofix leveler has dried, the surface should be sanded down using an electric belt sander, set to a very shallow sanding depth. A manual sander can also be used. It is recommended to wear a dust mask.
4.8 Only sand down as much as is necessary so that the surface is level across the joint between the boards and over the screw heads. The glass fleece coat must not be broken.
**4.9 N.B. It is vital that the ceiling surface is completely flat, level and clean if the finished ceiling is to be optically perfect."**

Similarly, StoSilent Panel Robust, by Sto AG may be used.

Instead of applying to the ceiling Sto-top plaster coating, as instructed in the above-referenced data sheet, a paint having a formulation described in the Annex below was used. All the constituents mentioned in the Annex are commercially available, in particular, HT dicapearl microballons and HT 150 Ceramics, are available from Hy Tech thermal coatings.

The paint of the formulation given in the Annex was applied by a low pressure spraying equipment set up for gun pressure of about 0.5 Atm or less. The gun distance from the substrate could be set up to a range of 50 - 100 cm, however, the preferable distance is 70 - 80 cm from the surface. The paint is applied until a smooth surface is obtained and the joints are fully covered.. Between application of sequential layers, about 3 hours drying period was required, but this period may vary with room temperature and humidity. StoSilent Panel 2000 may be replaced with other similar dimensionally stable boards.

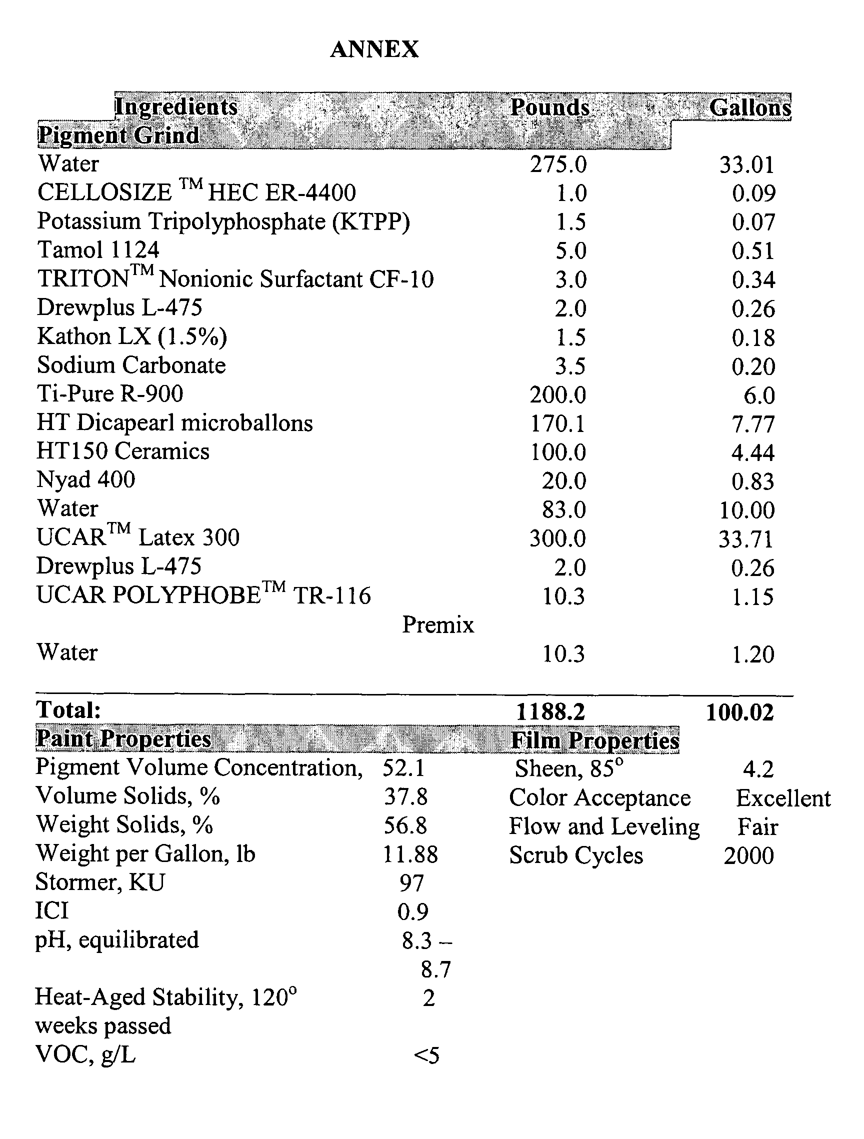

## Claims

1. An acoustically transparent paint that includes hollow microspheres of blown glass and comprises solid particles of no more than 200micrometers in diameter.

2. An acoustically transparent paint according to claim 1, wherein the solid content is between 40% and 65% (w/w).

3. An acoustically transparent paint according to claim 1 or 2, wherein said hollow microspheres of blown glass have diameter of between 50 and 200 micrometers.

4. An acoustically transparent paint according to the preceding claim, wherein said diameter is of between 100 and 200 micrometers.

5. An acoustically transparent paint according to any one of the preceding claims, wherein said microspheres of blown glass are degassed.

6. An acoustically transparent paint according to any one of the preceding claims, wherein the volume of said microspheres is between 5% and 25% of the total paint volume.

7. An acoustically transparent paint according to any one of the preceding claims, wherein the volume of said microspheres is between 10% and 15% of the total paint volume.

8. A seamless smooth acoustical surface comprising inert acoustical panels painted with an acoustically transparent paint that includes hollow microspheres of blown glass.

9. A seamless smooth acoustical surface according to claim 8, wherein said paint is according to any one of claims 1 to 7.

10. A seamless smooth surface according to claim 8 or 9, wherein the inert acoustical panel comprises blown glass granulates.

11. A seamless smooth surface according to any one of claims 8 to 10, wherein the inert acoustical panel is fiber-free.

12. A seamless smooth surface according to any one of claims 8 tol 1, having a thermal expansion between 6 and 10 X 10⁻⁶_{m/mK}.

13. A seamless smooth surface according to any one of claims 8 to 12, wherein the thickness of the paint layer is of between 250 and 500 micrometers.

14. A smooth surface according to any one of claims 8 to 13, having a textile fleece situated between the panel and the paint.

15. A smooth surface according to claim 14, wherein said textile fleece is made of a non-woven textile.

16. A method for painting an acoustical panel while retaining the acoustical properties thereof, comprising coating said acoustical panel with an acoustically transparent paint that includes hollow microspheres of blown glass.

17. A method according to claim 15, wherein said paint is according to any one of claims 1 to 7.

18. A method according to claim 16 or 17, wherein the thickness of the paint layer is between 250 and 500 micrometers.

19. A method according to any one of claims 16 to 18, wherein said coating includes spraying the paint at pressure of 0.5 atmosphere or less.
